# EUROPEAN PATENT SPECIFICATION

(11) **EP 0 453 325 B1**
(45) Date of publication and mention of the grant of the patent: **17.11.1994**
(21) Application number: 91303592.9
(22) Date of filing: 22.04.1991
(51) Int. Cl.: B62D 29/04

(54) **Motor vehicle body structure employing sandwiched structural body**
Kraftfahrzeug-Karosserie mit einer Sandwich-Struktur für den Wagenkasten
Carrosserie d'un véhicule à moteur ayant une caisse de voiture à structure sandwich

(30) Priority: 20.04.1990 JP 42209/90 U; 25.04.1990 JP 44404/90 U
(43) Date of publication of application: 23.10.1991
(73) Proprietor: HONDA GIKEN KOGYO KABUSHIKI KAISHA, Minato-ku, Tokyo (JP)
(72) Inventor: Aoyama, Tadatoshi, c/o Honda R & D Co., Ltd., Wako-shi, Saitama (JP); Yoshida, Suguru, c/o Honda R & D Co., Ltd., Wako-shi, Saitama (JP); Suganuma, Masanori c/o Honda R & D Co., Ltd., Wako-shi, Saitama (JP); Chirifu, Takashi c/o Honda R & D Co., Ltd., Wako-shi, Saitama (JP)
(74) Representative: Leale, Robin George

(56) References cited:
- FR-A- 2 360 459
- US-A- 4 559 274
- US-A- 4 573 707

## Description

The present invention relates to a motor vehicle body structure employing a sandwiched structural body which comprises a core layer whose opposite surfaces are covered with outer skin layers.

Composite structural bodies mainly made of synthetic resin or reinforced plastic, instead of steel sheets, have recently been proposed and used as motor vehicle bodies for the purposes of reducing the weight of motor vehicles and also increasing productivity of motor vehicles.

Such composite structural bodies are generally in the form of a sandwiched structural body comprising a core layer whose opposite surfaces are covered with outer skin layers. The core layer may be made of foamed plastic (see, for example, Japanese Patent Publications Nos. 46-36329 and 55-43912, Japanese Laid-Open Utility Model Publication No. 63-30276, U.S. Patents Nos. 4,559,274 and 4,573,707), or of a honeycomb structure (see, for example, Japanese Laid-Open Patent Publication No. 47-32521, Japanese Laid-Open Utility Model Publications Nos. 57-114774, 62-174935, and 62-174978). It has also been proposed to use, as a motor vehicle body, a sandwiched structural body with a hollow space in a core layer, as disclosed in Japanese Laid-Open Utility Model Publication No. 62-166136, for example.

Modern motor vehicles such as automobiles mostly have a monocoque body that combines a frame and a body together and which serves as a frame for bearing applied external forces as they are distributed over the entire monocoque body. The monocoque body is advantageous in that the entire motor vehicle weight is reduced, and the motor vehicles can be produced at an increased production rate and with less cost.

Therefore, it is preferable that motor vehicle bodies in the form of composite structural bodies of synthetic resin, reinforced plastic or the like be also of a monocoque structure for reduced motor vehicle weight and increased productivity. Demands for composite structural bodies as monocoque motor vehicle bodies are growing.

However, if a monocoque motor vehicle body were assembled from a plurality of components in the form of sandwiched composite structural bodies mainly of synthetic resin, as with conventional steel sheets or the like, then the assembled monocoque body would not be sufficiently mechanically strong, durable, and shock-resistant.

There has been proposed a joint structure for joining a floor panel and a pair of side frames in a basic frame assembly for a motor vehicle body structure, the floor panel and the side frames being in the form of sandwiched structural bodies, as disclosed in Japanese Utility Model Application No. 1-72061.

Although each of the components of the proposed frame assembly is sufficiently mechanically strong, durable, and shock-resistant, it is desired that the assembled motor vehicle body structure should be of higher rigidity against torsional and bending stresses.

Furthermore, the assembled motor vehicle body structure should also be strong enough to support various mechanical components including front suspension beams, upper arms, and an engine with sufficient mechanical strength, and to have increased shock resistance in various body regions.

In view of the foregoing demands, there have been proposed component attachment structures of a motor vehicle body in the form of sandwiched structural bodies, i.e., component attachment structures for front suspension beams, front suspension upper arms, and an engine (see U.S. Patent Application No. 446,429 filed December 5, 1989 and European Patent Application No. 89312811.6 filed December 8, 1989).

From the publication "Product Engineering", April, 1973, it is known to provide a motor vehicle body structure comprising: a pair of side frames each comprising a core layer having opposite surfaces and a pair of outer skin layers covering the opposite surfaces.

The present invention is characterised in that the side frames are connected to each other by way of holders and connectors , the side frames including integral front and rear laterally extending frustoconical shaped protrusions whose surfaces are joined to complementary surfaces on the holders, the connectors extending between and interconnecting the corresponding front and rear holders to form the assembled structure.

The motor vehicle body structure thus constructed is highly rigid against torsional and bending stresses produced by external forces applied thereto.

The side frames have integral protrusions extending laterally, the joints being joined to surfaces of the protrusions. The joints comprise a pair of holders having joint surfaces which are complementary in shape to the surfaces of the protrusions.

An embodiment of the invention will now be described by way of example and with reference to the accompanying drawings in which:-
FIG. 1 is a perspective view of a motor vehicle body structure according to an embodiment of the present invention;
FIG. 2 is an enlarged fragmentary cross-sectional view of a portion of the motor vehicle body structure shown in FIG. 1; and
FIG. 3 is a perspective view, partly cut away, of a righthand front joint of the motor vehicle body structure shown in FIG. 1;

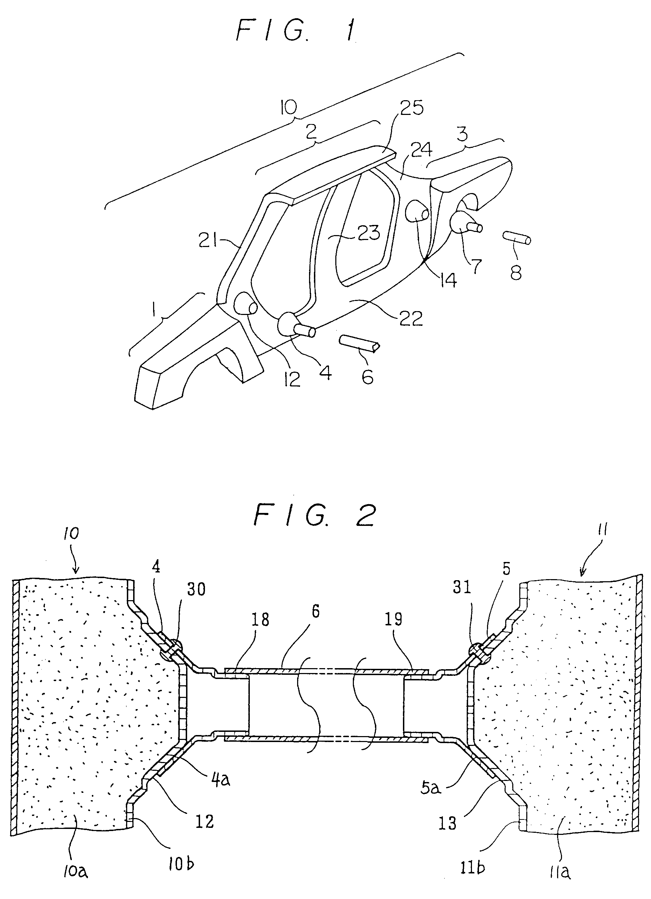

FIG. 1 shows a motor vehicle body structure according to an embodiment of the present invention. In FIG. 1, only a righthand side frame of the motor vehicle body structure is shown as the motor vehicle body structure is symmetrical in shape with respect to its longitudinal axis.

The side frame, generally denoted at 10, comprises a front member 1, a middle member 2, and a rear member 3 which are integrally joined together. The middle member 2 has a front pillar 21, a side sill 22, a center pillar 23, a rear pillar 24, and a side roof rail 25.

As shown in FIG. 2, the righthand side frame 10 and a lefthand side frame 11 are in the form of respective sandwiched structural bodies which comprise respective core layers 10a, 11a whose opposite surfaces are covered with outer skin layers 10b, 11b, respectively. The outer skin layers 10b, 11b may be made of any of various synthetic resins, but should preferably be made of fiber-reinforced plastic. The matrix material of such fiber-reinforced plastic should preferably be thermoplastic resin because it has good formability, i.e., can well be formed into complex shapes. The core layers 10a, 11a may be made of foamed plastic, or in the form of a honeycomb core, or have a hollow space therein, but should preferably be made of foamed plastic, particularly, polyurethane foam, in view of its good formability and increased mechanical strength. In those motor vehicle body components where less stress concentration is expected and no strength problem appears to happen, the core layers may be of a hollow structure. The motor vehicle body structure of such a hollow core arrangement is also advantageously usable in the context of the present invention.

As shown in FIG. 1, the side frame 10 has a front frustoconical protrusion 12 integrally projecting laterally inwardly from a side surface of the side frame 10, i.e., from a boundary region between the front pillar 21 and the front frame 1, and a rear frustoconical protrusion 14 integrally projecting laterally inwardly from a side surface of the side frame 10, i.e., a boundary region between the rear pillar 24 and the rear fender 3. To the protrusions 12, 14, there are joined respective front and rear holders 4, 7 which are connected by respective front and rear connectors 6, 8, thus connecting the righthand side frame 10 to the lefthand side frame 11 (FIG. 2).

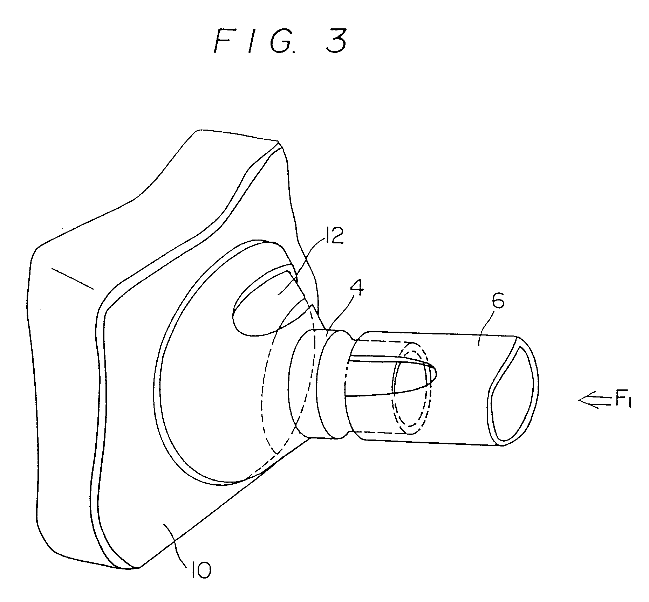

The front and rear protrusions and the holders joined thereto, which provide reinforced structures, are identical in basic structure. Therefore, only the front protrusions of the side frames 10, 11 and the associated holders are shown in FIG. 2. FIG. 3 shows only the front protrusion 12 of the righthand side frame 10 and the front holder 4 joined thereto as the front protrusion of the lefthand side frame and the front holder joined thereto are identical in shape.

As shown in FIG. 2, the lefthand side frame 11 also has a front frustoconical protrusion 13, with a front holder 5 joined thereto. The front holders 4, 5 have frustoconical joint surfaces 4a, 5a complementary in shape to the front protrusions 12, 13, respectively, and fastened to outer surfaces of the front protrusions 12, 13 by rivets 30, 31, respectively. The rivets 30, 31 extend through the front holders 4, 5 and the outer skin layers 10b, 11b of the sandwiched structural bodies of the side frames 10, 11, and have pressed and hammered heads clamping the front holders 4, 5 and the outer skin layers 10b, 11b therebetween. An adhesive may also or alternatively be used to bond the front holders 4, 5 to the front protrusions 12, 13 and also the connector 6 to the front holders 4, 5.

The front holders 4, 5 have respective tubular fitting portions 18, 19 extending rearwardly from the joint surfaces 4a, 5a, respectively. The front connector 6, which is of a tubular shape, has opposite ends fitted respectively over and joined to the tubular fitting portions 18, 19. Therefore, the side frames 10, 11 are coupled to each other in supporting relationship to each other by the front holders 4, 5 and the connector 6.

The reinforced body structure shown in FIG. 2 is effective to withstand external forces applied in various directions to the motor vehicle body structure. For example, when external forces are applied laterally to the side frame 10, the structure shown in FIG. 2 is mechanically strong enough to resist such lateral external forces because the connector 6 between the side frames 10, 11 is sufficiently rigid against compressive forces. Since the front protrusions 12, 13 and the joint surfaces 4a, 5a of the front holders 4, 5 are frustoconical in shape, when a compressive force F1 (FIG. 3) is transmitted from the connector 6 through the front holder 4 to the side frame 10, the applied force F1 is divided into a compressive force and a shearing force by the front frustoconical protrusion 12, and these divided forces are distributed over the side frame 10. Therefore, the structure shown in FIG. 2 is mechanically strong against laterally applied external forces.

The connector 6 between the side frames 10, 11 is also rigid against external forces such as torsional or bending forces. Accordingly, the motor vehicle body is of increased rigidity against such external forces. The frustoconical joint surfaces 4a, 5a of the front holders 4, 5 are also effective to break and distribute torsional or bending forces, which are applied from the connector 6 and the front holders 4, 5, over the side frames 10, 11. The rigidity of the motor vehicle body is thus very high against torsional or bending stresses.

While only the front protrusions 12, 13, the front holders 4, 5, and the front connector 6 are described by way of example, the rear protrusions, the rear holders, and the rear connector are of the same structure and joined together in the same manner for high mechanical strength and rigidity against various external forces.

A steering column (not shown) may be mounted on the front connector 6. Since the front connector 6 is rigid, external forces applied through the steering column to the front connector 6 are sufficiently resisted by the front connector 6, and hence the motor vehicle body is of increased rigidity against such external forces. The frustoconical joints between the side frames 10, 11 and the front holders 4, 5 are effective to break and distribute external forces, which are applied through the steering column to the motor vehicle body, over the side frames 10, 11 through the front connector 6 and the front holders 4, 5. The motor vehicle body therefore has increased rigidity against such external forces.

In the above embodiment, each of the side frames 10, 11 is of a unitary structure. However, the front member 1, the middle member 2, and the rear member 3 of each of the side frames 10, 11 may be separate from each other.

In the above embodiment, there are front and rear reinforced structures respectively in the boundary regions between the front pillar 21 and the front member 1 and between the rear pillar 24 and the rear member 3. However, the position and number of such reinforced structures, the configurations of their portions where components are attached, and the dimensions of such components may be determined depending on the magnitude and direction of external forces to be applied, and the degree of motor vehicle body rigidity to be achieved. The motor vehicle body rigidity may freely be varied by varying the dimensions of the joints between the holders and the protrusions and the joints between the holders and the connector.

While the pair of holders and the connector are separate from each other in the illustrated embodiment, one of the paired holders may be integral with the connector, or both of the paired holders may be integral with the connector.

The holders and the connector may be made of sheet steel or the like, but should preferably be made of synthetic resin from the standpoint of achieving reduced weight, and particularly preferably should be made of fiber-reinforced plastic.

The rivets by which the protrusions of the side frames and the holders are fastened to each other may be effectively used as temporary fasteners until an adhesive by which the protrusions and the holders are bonded to each other is hardened, or may be effective as additional fasteners after such an adhesive is hardened. Similarly, rivets may be used as temporary fasteners until an adhesive by which the holders and the connector are bonded to each other is hardened. Other fasteners than the rivets may be employed as the temporary fasteners or additional fasteners.

With the present invention, as described above, the motor vehicle body structure allows the motor vehicle to be reduced in weight and manufactured with increased productivity, and increases the rigidity of the motor vehicle body for increased resistance to shocks induced by external forces applied in various directions and also for increased mechanical strength of component attachments.

Although there has been described what is at present considered to be the preferred embodiment of the present invention, it will be understood that the invention may be embodied in other specific forms without departing from the essential characteristics thereof. The present embodiments are therefore to be considered in all aspects as illustrative, and not restrictive.

## Claims

1. A motor vehicle body structure comprising: a pair of side frames (10,11) each comprising a core layer (10a,11a) having opposite surfaces and a pair of outer skin layers (10b,11b) covering the opposite surfaces;
characterised in that the side frames are connected to each other by way of holders (4,5,7) and connectors (6,8), the side frames including integral front and rear laterally extending frustoconical shaped protrusions (12,13,14,15) whose surfaces are joined to complementary surfaces on the holders, the connectors extending between and interconnecting the corresponding front and rear holders to form the assembled structure.

2. A motor vehicle body structure according to claim 1, wherein each of said side frames (10,11) comprises a front pillar (21), a front member (1) connected to said front pillar through a front boundary region, a rear pillar (24), and a rear member (3) connected to said rear pillar through a rear boundary region, said protrusions being positioned in said front and rear boundary regions, respectively.

3. A motor vehicle body structure according to claim 1, wherein said core layer (10a,11a) is made of foamed plastic and said outer skin layers (10b,11b) are made of fiber-reinforced plastic.

## Patentansprüche

1. Kraftfahrzeugkarosseriestruktur, mit einem Paar von Seitenrahmen (10, 11), die jeweils eine Kernschicht (10a, 11a) mit gegenüberliegenden Oberflächen und ein Paar die gegenüberliegenden Oberflächen bedeckende Außenhautschichten (10b, 11b) aufweisen;
dadurch gekennzeichnet,
daß die Seitenrahmen mittels Haltern (4, 5, 7) und Verbindern (6, 8) miteinander verbunden sind, wobei die Seitenrahmen integrale vordere und hintere seitlich abstehende kegelstumpfförmige Vorsprünge (12, 13, 14, 15) aufweisen, deren Oberflächen mit komplementären Flächen an den Haltern verbunden sind, wobei die Verbinder zwischen den entsprechenden vorderen und hinteren Haltern verlaufen und diese zur Bildung der zusammengesetzten Struktur miteinander verbinden.

2. Kraftfahrzeugkarosseriestruktur nach Anspruch 1, in der jeder der Seitenrahmen (10, 11) umfaßt: einen vorderen Pfosten (21), ein durch einen vorderen Grenzbereich mit dem vorderen Pfosten verbundenes vorderes Teil (1), einen hinteren Pfosten (4) und ein durch einen hinteren Grenzbereich mit dem hinteren Pfosten verbundenes hinteres Teil (3), wobei die Vorsprünge jeweils in den vorderen und hinteren Grenzbereichen angeordnet sind.

3. Kraftfahrzeugkarosseriestruktur nach Anspruch 1, in der die Kernschicht (10a, 11a) aus Schaumkunststoff hergestellt ist und die Außenhautschichten (10b, 11b) aus faserverstärktem Kunststoff hergestellt sind.

## Revendications

1. Structure de caisse de véhicule à moteur comportant: une paire de cadres latéraux (10, 11) comportant chacun une couche formant noyau (10a, 11a) ayant des surfaces opposées et une paire de couches de revêtement extérieur (10b, 11b) recouvrant les surfaces opposées,
caractérisée en ce que les cadres latéraux sont reliés l'un à l'autre par l'intermédiaire de dispositifs de maintien (4, 5, 7) et de connecteurs (6, 8), les cadres latéraux comportant des saillies avant et arrière venues de matière (12, 13, 14, 15) ayant une forme tronconique s'étendant latéralement dont les surfaces sont reliées à des surfaces complémentaires des dispositifs de maintien, les connecteurs s'étendant entre les dispositifs de maintien avant et arrière correspondants et reliant ceux-ci pour former la structure assemblée.

2. Structure de caisse de véhicule à moteur selon la revendication 1, dans laquelle chacun desdits cadres latéraux (10, 11) comporte un montant avant (21), un élément avant (1) relié audit montant avant par l'intermédiaire d'une zone limite avant, un montant arrière (24), et un élément arrière (3) relié audit montant arrière par l'intermédiaire d'une zone limite arrière lesdites saillies étant positionnées dans lesdites zones limites avant et arrière respectivement.

3. Structure de caisse de véhicule à moteur selon la revendication 1, dans laquelle ladite couche formant noyau (10a, 11a) est constituée de matière plastique en forme de mousse et lesdites couches de revêtement extérieur (10b, 11b) sont constituées de matière plastique renforcée de fibres.
